**Europäisches Patentamt**

**European Patent Office**

**Office européen des brevets**

(19)

(11) Veröffentlichungsnummer: **0 006 188**
**B1**

(12) **EUROPÄISCHE PATENTSCHRIFT**

(45) Veröffentlichungstag der Patentschrift: **18.05.83**

(21) Anmeldenummer: **79101801.3**

(22) Anmeldetag: **07.06.79**

(51) Int. Cl.³: **B 29 H  17/00,**
**B 29 F  1/022, B 29 F  1/06,**
**B 29 C  1/04**

(54) **Verfahren zur Herstellung eines torusförmigen Hohlkörpers aus einem giessfähigen, aushärtbaren Material.**

(30) Priorität: **16.06.78 DE  2826340**

(43) Veröffentlichungstag der Anmeldung:
**09.01.80 Patentblatt 80/1**

(45) Bekanntmachung des Hinweises auf die Patenterteilung:
**18.05.83 Patentblatt 83/20**

(84) Benannte Vertragsstaaten:
**AT BE CH DE FR GB IT NL SE**

(56) Entgegenhaltungen:
**DE - B - 1 160 169**
**FR - A - 1 470 691**
**FR - A - 2 144 809**
**GB - A - 828 011**
**US - A - 4 031 176**

(73) Patentinhaber: **METZELER KAUTSCHUK GMBH**
**Gneisenaustrasse 15**
**D-8000 München 50 (DE)**

(72) Erfinder: **Willmerding, Günter, Dr. Ing.**
**Hirtenweg 3**
**D-8084 Inning (DE)**

(74) Vertreter: **Michelis, Theodor, Dipl.-Ing.**
**Gneisenaustrasse 15**
**D-8000 München 50 (DE)**

Courier Press, Leamington Spa, England.

Verfahren zur Herstellung eines torusförmigen Hohlkörpers aus einem gießfähigen, aushärtbaren Material

Die Erfindung betrifft ein Verfahren zur Herstellung eines torusförmigen Hohlkörpers aus einem gießfähigen, aushärtbaren Material der im Oberbegriff des Patentanspruchs angegebenen Gattung.

Obwohl ein solches Verfahren zur Herstellung von verschiedenen, torusförmigen Hohlkörpern eingesetzt werden kann, soll es im folgenden im wesentlichen unter Bezugnahme auf die Herstellung von Luftreifen aus Polyurethan erläutert werden. Dabei wird entweder die Karkasse allein aus Polyurethan hergestellt, oder Karkasse und Lauffläche werden im sogenannten "Einschußverfahren" gleichzeitig aus Polyurethan gegossen.

Ein großes Problem bei der Herstellung von Lufteifen stellt das blasenfreie Gießen der Karkasse dar, d.h., der Gießvorgang muß so durchgeführt werden, daß keine mit Luft gefüllten Einschlüsse entstehen können.

Diese Blasenfreiheit läßt sich jedoch bisher nur durch Anwendung von relativ aufwendigen Maßnahmen erreichen.

So ist bereits vorgeschlagen worden, den Formhohlraum vor dem Einfüllen des Polyurethans zu evakuieren. Dies bedingt jedoch, daß der Formhohlraum sehr gut abgedichtet sein muß, damit bis zum Ende des Gießvorgangs nicht wieder Luft in den Formhohlraum eindringen kann. Ein solcher, relativ gut abgedichteter Formhohlraum hat jedoch sehr hohe Herstellungskosten; außerdem ist er noch sehr anfällig gegen Verspannungen, wie sie bei der abwechselnden Erwärmung und Abkühlung der Form nicht zu vermeiden sind, sowie gegen Erschütterungen, welche die Dichtigkeit ebenfalls nachteilig beeinflussen können.

Aus der US—A—4 031 176 ist ein Verfahren zum Spritzgießen von geformten, expandierbaren thermoplastischen Materialien bekannt, bei dem eine verformbare Membran zwischen die beiden Hälften einer Form eingespannt wird; durch Anlegen eines Unterdrucks an eine Seite der Membran und eines Überdrucks an die andere Seite der Membran wird sie verformt, so daß sich die Membran an eine Innenfläche des Formhohlraums anlegt. Das flüssige Reaktionsgemisch wird dann gegen die an der Innenwand der Form anliegende Fläche der Membran gespritzt, so daß die Membran allmählich zurückweicht und sich im Verlaufe des Einspritzvorgangs an die gegenüberliegende Wand des Formhohlraums anlegt. Dadurch kann sich der gesamte Formhohlraum mit dem Reaktionsgemisch füllen, so daß nach Abziehen der Membran ein massiver, geschäumter Kunststoffkörper entsteht, dessen Außenhaut durch die vorherige Bedeckung mit der Membran eine sehr günstige Struktur hat.

Verfahren zur Herstellung von torusförmigen Hohlkörpern, nämlich Luftreifen, der angegebenen Gattung sind aus der DE—A—2 231 780 und der DE—A—2 156 055 bekannt; dabei wird der Gießvorgang unter gleichzeitiger Rotation der Form mit der Membran durchgeführt. Infolge der dadurch entstehenden Fliehkräfte wird innerhalb des Gießmaterials ein Druckfeld erzeugt, so daß die vorhandenen Luftblasen sehr schnell und zuverlässig nach außen entweichen können und der fertige Hohlkörper praktisch blasenfrei ist. Auch dieses Verfahren erfordert jedoch einen hohen konstruktiven Aufwand, da nun die Form und ihre Halterung in Anbetracht der bei einer Drehzahl von etwa zwei Umdrehungen pro Sekunde auftretenden, relativ hohen Fliehkräfte sehr massiv ausgestaltet werden müssen.

Der Erfindung liegt deshalb die Aufgabe zugrunde, ein Verfahren zur Herstellung eines torusförmigen Hohlkörpers aus einem gießfähigen, aushärtbaren Material der angegebenen Gattung zu schaffen, bei dem ohne Evakuierung und/oder Rotation der Form die weitgehende Blasenfreiheit des fertigen Hohlkörpers gewährleistet wird.

Diese Aufgabe wird erfindungsgemäß durch die im kennzeichnenden Teil des Patentanspruchs angegebenen Merkmale gelöst.

Die mit der Erfindung erzielten Vorteile beruhen auf folgender Funktionsweise: Vor der Zuführung des gießfähigen, aushärtbaren Materials zu dem Formhohlraum wird die Membran auf ein Volumen ausgedehnt, das den Formhohlraum im wesentlichen ausfüllt. Dadurch wird die im Formhohlraum vorhandene Luft, zweckmäßigerweise durch eine verschließbare Öffnung der Formwand, verdrängt, so daß sich ein praktisch "evakuierter", nur mit der Membran gefüllter Formhohlraum ergibt. Die gegebenenfalls in der Membran befindliche Luft ist durch die Membran von dem Formhohlraum getrennt, so daß sie den anschließenden Gießvorgang nicht beeinflussen kann.

Nach dem Verschließen der Auslaßöffnung für die Luft wird nun das gießfähige, aushärtbare Material zwischen die Innenfläche des Formhohlraums und die Außenfläche der Membran eingefüllt und verdrängt aufgrund seiner Inkompressibilität die Membran, d.h., die Membran schrumpft entsprechend der zugeführten Menge des flüssigen Materials zusammen, ohne daß Luft in relevanten Mengen in den Formhohlraum eindringen kann.

Sobald eine Menge gießfähiges Material zugeführt worden ist, die dem Volumen des herzustellenden Formkörpers entspricht, wird die Einfüllung des gießfähigen Materials unterbrochen. Dieses Material kann nun aushärten und anschließend nach Entfernen des Kerns aus der Form herausgenommen werden.

Für die Ausgestaltung des Kerns bestehen zwei Möglichkeiten: Die Membran wird allein durch das fluide Medium oder zusätzlich durch einen üblichen, zerlegbaren Metallkörper gestützt, dessen Außenfläche von der verformbaren Membran umgeben wird.

Erfolgt die Abstützung nur durch das fluide Medium, so sollte dieses fluide Medium durch eine Flüssigkeit gebildet werden, deren spezifisches Gewicht dem spezifischen Gewicht des gießfähigen, aushärtbaren Materials entspricht. Nach dem Einfüllen der gesamten, dem herzustellenden Hohlkörper angepaßten Menge an gießfähigen Material hat die Außenfläche der Membran genau die Form der Innenkontur des Hohlkörpers, beispielsweise einer Reifenkarkasse.

Nach der Einfüllung des Materials wird die Flüssigkeit aus der Membran herausgepumpt, so daß die zusammengelegte Membran ohne Schwierigkeiten aus dem Formhohlraum herausgezogen werden kann.

In diesem Fall läßt sich die Steuerung der dem Formhohlraum zuzuführenden Menge an gießfähigem, aushärtbarem Material entweder durch Einstellung der Menge oder durch Einstellung des Drucks durchführen. Bei der "Mengensteuerung" wird über einen Mengenregler eine bestimmte Menge des aushärtbaren Materials dem Formhohlraum zugeführt, während gleichzeitig über einen weiteren Mengenregler eine identische Menge Flüssigkeit aus dem Innern der Membran abgezogen wird.

In diesem Fall ist es jedoch schwierig, die exakte Gleichheit der beiden Mengen zu erreichen, da hierbei äußerst präzise arbeitende Pumpen und Mengenregler verwendet werden müssen.

Zweckmäßigerweise wird deshalb in der die Membran füllenden Flüssigkeit ein bestimmter Überdruck aufrechterhalten, um die Membran auf das Volumen des Formhohlraums zu expandieren. Wird nun das aushärtbare, gießbare Material mit Überdruck in Bezug auf den Membran-Innendruck zugeführt, so wird die Membran unter Verdängung einer bestimmten Flüssigkeitsmenge auf ein genau definiertes Volumen zusammengedrückt, d.h., es kann die entsprechende Menge aushärtbares Material in den Formhohlraum eindringen. Auf diese Weise wird gewährleistet, daß die zur Herstellung des Hohlkörpers erforderliche Materialmenge in den Formhohlraum eingefüllt wird.

Bei der alternativen Ausführungsform, bei der die Membran zusätzlich durch einen Metallkörper abgestützt wird, wird die Membran vor der Einfüllung des aushärtbaren Mediums ausgedehnt, wie es oben erwähnt wurde, um die Luft aus dem Formhohlraum zu verdrängen. Bei der Einfüllung des aushärtbaren Materials wird die Membran unter Verdrängung des in ihr befindlichen, fluiden Mediums, beispielsweise eines Gases oder einer Flüssigkeit, zusammengedrückt und legt sich schließlich an die Außenfläche des Metallkörpers an, dessen Form der Innenkontur des Hohlkörpers entspricht.

Der Metallkörper sollte zerlegbar sein, um die Entformung zu erleichtern.

Dieses Verfahren ist insbesondere für die Herstellung von Karkassen für Luftreifen geeignet, bei denen die völlige Blasenfreiheit und gleichzeitig die hohe Formtreue sehr wesentlich sind.

Es können jedoch auch Luftreifen in sogenannten "Einschußverfahren" hergestellt werden, also in einem Verfahren, bei dem Karkasse und Lauffläche gleichzeitig gefertigt werden.

Im Bereich des Laufflächenprofils kann dann zwar die Membran den Formhohlraum nicht vollständig ausfüllen, so daß dort noch Luft zurückbleibt. Die durch diese zurückgebliebene Luft entstehenden Blasen befinden sich jedoch im wesentlichen im Bereich der Lauffläche, wo sie weniger störend sind als im Bereich der Karkasse.

Die Erfindung wird im folgenden anhand von Ausführungsbeispielen unter Bezugnahme auf die beiliegenden, schematischen Zeichnungen näher erläutert. Es zeigen:

Fig. 1 einen Schnitt durch eine Vorrichtung zur Durchführung des erfindungsgemäßen Verfahrens zur Herstellung eines torusförmigen Hohlkörpers, bei dem die Membran nur durch das fluide Medium abgestützt wird, und

Fig. 2 eine Vorrichtung zur Durchführung des erfindungsgemäßen Verfahrens, bei dem die Membran durch ein fluides Medium sowie durch einen Metallkörper abgestützt wird.

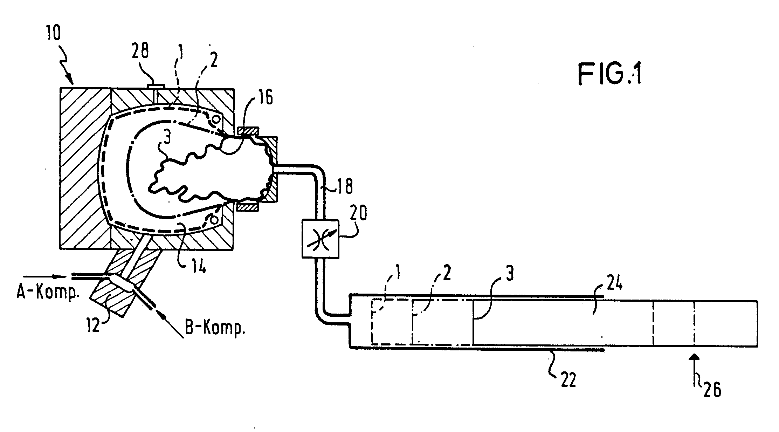

Wie sich aus Figur 1 ergibt, weist eine Vorrichtung zur Durchführung des Verfahrens zur Herstellung eines torusförmigen Hohlkörpers eine herkömmliche Form 10 auf, die aus mehreren, nicht im einzelnen dargestellten Einzelteilen besteht. Nach Beendigung des Gießvorgangs können die einzelnen Teile der Form 10 herausgenommen werden, um die Entformung des fertigen Hohlkörpers zu erleichtern.

An die Form 10 ist ein Hochdruckmischkopf 12 angeschlossen, in dem die Komponenten A bzw. B des Polyurethans gemischt und dann gemeinsam dem Formhohlraum 14 der Form 10 zugeführt werden.

In dem Formhohlraum 14 befindet sich eine schematisch in mehreren Stellungen angedeutete, verformbare Membran 16, die zweckmäßigerweise aus einem elastischen Material hergestellt ist. Dazu kann beispielsweise Gummi, aber auch ein Elastomer, wie beispielsweise Polyurethan, mit einer Wandstärke von ca. 2 mm verwendet werden.

Diese Membran 16 steht über eine Leitung 18, in der sich ein Druckregler 20 befindet, mit einem Zylinder 22 in Verbindung, in dem ein verschiebbarer Kolben 24 angeordnet ist.

Außerdem ist in dem Zylinder 22 ein Fühler 26 für die jeweilige Lage des Kolbens 24 vorgesehen; dieser Fühler dient zur Unterbrechung der Zuführung des Polyurethans zu dem Formhohlraum 14, wie im folgenden noch erläutert werden soll.

Der Innenraum der Membran 16, die Leitung 18 und der Zylinder 22 sind mit einer Flüssigkeit gefüllt, deren spezifisches Gewicht gleich dem spezifischen Gewicht des Polyurethans ist, das zur Herstellung des Luftreifens verwendet wird.

Zu Beginn der Fertigung eines Reifens wird der Kolben 24 gemäß der Darstellung in Fig. 1 in dem Zylinder 22 nach links verschoben, so daß die Flüssigkeit über die Leitung 18 in die Membran 16 strömt und diese soweit expandiert, daß sie das Volumen des Formhohlraums 14 ausfüllt. Diese Stellung der Membran 16 sowie die entsprechende Lage des Kolbens 24 in dem Zylinder 22 ist in Fig. 1 durch das Bezugszeichen 1 angedeutet.

Dabei steht die Flüssigkeit unter einem gewissen Überdruck in Bezug auf den Atmosphärendruck, um das Eindringen von Luft in den Formhohlraum 14 zu verhindern.

Um das Entweichen der Luft aus dem Formhohlraum 14 zu erleichtern, ist am höchsten Punkt des Formhohlraums 14 ein Auslaß 28 vorgesehen, der nach der Beendigung der Expansion der Membran 16 verschlossen wird.

Nachdem sich praktisch keine Luft mehr in dem Formhohlraum 14 befindet und der Auslaß 28 verschlossen worden ist, wird durch den Hochdruck-Mischkopf 12 das Polyurethan in den Formhohlraum 14 eingefüllt. Diese Zuführung erfolgt mit einem Druck, der höher als der Druck der Flüssigkeit in der Membran 16 ist, so daß diese Flüssigkeit aus der Membran 16 herausgedrückt wird und durch die Leitung 18 und den Druckregler 20 zu dem Zylinder 22 strömt. Dadurch wird in dem Zylinder 22 der Kolben 24 um eine Strecke verschoben, die direkt proportional zu der Kontraktion der Membran und damit zu der Menge des zugeführten Polyurethans ist.

Es läßt sich also eine Lage des Kolbens 24 angeben, bei der dem Formhohlraum 14 genau die Polyurethanmenge zugeführt worden ist, die dem herzustellenden Luftreifen entspricht.

Wird diese Stelle mittels des Fühlers 26 ermittelt, so läßt sich nach der entsprechenden Verschiebung des Kolbens 24 die Zufuhr des Polyurethans zu dem Formhohlraum 14 unterbrechen.

In Fig. 1 ist die entsprechende Form der Membran sowie die entsprechende Lage des Kolbens 24 in dem Zylinder 22 durch das Bezugszeichen 2 angegeben.

Nun kann die Aushärtung des Materials beginnen, wobei die Zuführung der erforderlichen Wärme entweder direkt zu der Form und/oder über eine Erwärmung der Flüssigkeit in der Membran 16 erfolgen kann.

Nach der Aushärtung wird der Kolben 24 weiter gemäß der Darstellung in Fig. 1 nach rechts verschoben, wodurch sich die Membran 16 zusammenlegt und die mit dem Bezugszeichen 3 gekennzeichnete Form annimmt. Die entsprechende Lage des Kolbens 24 ist ebenfalls durch das Bezugszeichen 3 angegeben.

Nun kann die Membran leicht aus dem Innenraum des ausgehärteten Lufteifens herausgenommen werden, wonach der Reifen auf die übliche Weise entformt wird.

Bei dieser Ausführungsform muß also die nicht dargestellte Antriebseinheit für den Kolben 24 so ausgelegt sein, daß sie den Kolben 24 zwischen den beiden Lagen 1 und 3 verschieben und dadurch einen entsprechenden Druck in der Membran 16 erzeugen kann, der die Membran 16 auf das durch das Bezugszeichen 1 angedeutete Volumen expandiert.

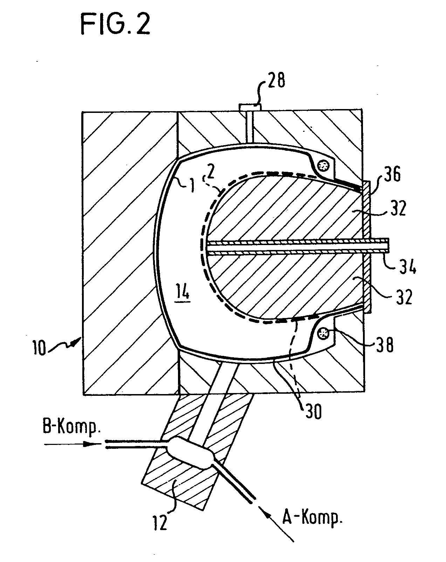

In Fig. 2 ist eine Ausführungsform dargestellt, bei der die Membran 30 nicht nur durch eine Flüssigkeit, sondern auch durch einen zerlegbaren Metallkörper 32 abgestützt wird.

Durch diesen Metallkörper erstreckt sich ein Einfüllrohr 34 von der Außenseite der Form 10 bis zum Formhohlraum 14. Der Metallkörper 32 ist durch eine schematisch angedeutete Abdichtplatte 36 nach außen abgedichtet, um das Austreten von Luft oder fluidem Medium zu vermeiden.

Außerdem sind in Fig. 2 Wulstkerne 38 zu erkennen, wie sie zur Herstellung von Polyurethan-Reifen verwendet werden.

Im übrigen sind in Fig. 2 die gleichen Bauteile wie bei der Ausführungsform nach Fig. 1 zu erkennen, so daß sie nicht mehr im einzelnen beschrieben werden sollen.

Vor der Einfüllung des aushärtbaren, gießfähigen Materials liegt die Membran 30 an der Außenfläche des Metallkörpers 32 an, hat also die durch das Bezugszeichen 2 gekennzeichnete Lage. Auch die Wulstkerne 38 sind bereits in die Form eingesetzt.

Nun wird durch das Einfüllrohr 34 ein fluides Medium, also ein Gas oder eine Flüssigkeit, durch den Metallkörper mit einem bestimmten Überdruck zugeführt, so daß die Membran 30 expandiert wird und schließlich die durch das Bezugszeichen 1 angedeutete Stellung einnimmt, also den Formhohlraum 14 vollständig ausfüllt. Anschließend wird durch den Hochdruck-Mischkopf 12 das Polyurethan-Gemisch mit einem Druck zugeführt, der größer als der Druck des fluiden Mediums ist, wodurch die Membran 16 zusammengedrückt wird und schließlich wieder die Lage 2 erreicht, also wieder an der Außenfläche des Metallkörpers 32 anliegt, dessen Form der Innenkontur des Reifens entspricht.

Nachdem nun der Formhohlraum 14 vollständig und blasenfrei mit Polyurethan gefüllt worden ist, kann die Aushärtung beginnen. Auch in diesem Fall kann die Wärmezufuhr entweder direkt zur Form oder über den Metallkörper 32 erfolgen.

Nach der Beendigung des Aushärtvorgangs wird der Metallkörper 32 auf übliche Weise in seine Einzelteile zerlegt, so daß Metallkörper 32 und Membran 30 aus der Form herausgenommen werden können. Anschließend kann dann der fertige Polyurethan-Reifen entformt werden.

Bei dieser Ausführungsform muß die Menge des Gießmaterials sehr genau dosiert werden, um ein Platzen der Form zu vermeiden. Diese Dosierung des Gießmaterials kann z.B. über das aus der Membran ausfließende Volumen des fluiden Mediums erfolgen, wobei der Mischkopf 12 bei Übersteigen eines bestimmten Volumens abgeschaltet wird.

### Patentanspruch

Verfahren zur Herstellung eines torusförmigen Hohlkörpers aus einem gießfähigen, aushärtbaren Material in einer Form (10) mit einem Formhohlraum (14) und einer in dem Formhohlraum (14) angeordneten, verformbaren, einen Formkern bildenden und durch ein fluides Medium gestützten Membran (16, 30), bei dem vor der Zuführung des Materials die Membran (16, 30) auf ein vorgegebenes Volumen expandiert und anschließend eine dem herzustellenden Hohlkörper entsprechende Menge aushärtbaren Materials zwischen Innenfläche des Formhohlraums (14) und Außenfläche der Membran (16, 30) eingefüllt wird, dadurch gekennzeichnet, daß

a) die Membran (16, 30) unter Verdrängung der im Formhohlraum (14) vorhandenen Luft auf ein den Formhohlraum (14) ausfüllendes Volumen expandiert wird, und daß
b) durch das Einfüllen des aushärtbaren Materials die Membran (16, 30) bis auf das Volumen des Hohlraums des Hohlkörpers kontrahiert wird.

### Revendication

Procédé de fabrication d'un corps creux torique en une matière durcissable, susceptible d'être coulée, dans un moule ayant une empreinte de moule et une membrane equi est disposée dans l'empreinte du moule, qui est déformable, qui forme un noyau de moulage et qui est soutenue par un milieu fluide, suivant lequel, avant l'amenée de la matière, on dilate la membrane jusqu'à ce qu'elle ait un volume prescrit et, ensuite, on introduit une quantité correspondant au corps creux à fabriquer de matière durcissable entre la surface intérieure de l'empreinte de moule et la surface extérieure de la membrane, caractérisé en ce qu'il consiste:

a) à dilater la membrane, en refoulant l'air se trouvant dans l'empreinte du moule, jusqu'à ce qu'elle prenne un volume remplissant l'empreinte du moule, et
b) en introduisant la matière durcissable à contracter la membrane en ne lui laissant que le volume de l'espace vide du corps creux.

### Claim

A method of producing a toroidal hollow body from a castable, curable material in a mould having a mould cavity and a deformable membrane which is positioned in the mould cavity, is supported by a fluid medium and forms a mould core, in which method, before the material is supplied, the membrane is expanded to a pre-determined volume and a quantity of curable material which corresponds to the hollow body to be produced is introduced between the inside surface of the mould cavity and the outside surface of the membrane, characterised in that

a) the membrane is expanded to a volume which fills the mould cavity while expelling the air in said cavity, and
b) the membrane is contracted to the volume of the cavity of the hollow body by the introduction of the curable material.

FIG.1

FIG.2